(19) Europäisches Patentamt
European Patent Office
Office européen des brevets

(11) Veröffentlichungsnummer: **0 101 954**
**B1**

(12) # EUROPÄISCHE PATENTSCHRIFT

(45) Veröffentlichungstag der Patentschrift: **02.07.86**

(21) Anmeldenummer: **83107472.9**

(22) Anmeldetag: **29.07.83**

(51) Int. Cl.⁴: **C 09 B 57/04,** C 08 K 5/34, C 07 D 403/12, C 07 D 405/12, C 07 D 413/12, C 07 D 417/12, C 07 D 403/14

(54) **Isoindolazine, Verfahren zu ihrer Herstellung sowie ihre Verwendung.**

(30) Priorität: **10.08.82 DE 3229733**

(43) Veröffentlichungstag der Anmeldung: **07.03.84 Patentblatt 84/10**

(45) Bekanntmachung des Hinweises auf die Patenterteilung: **02.07.86 Patentblatt 86/27**

(84) Benannte Vertragsstaaten: **CH DE GB LI**

(56) Entgegenhaltungen:
**EP-A-0 036 387**
**DE-A-2 142 245**
**DE-A-2 504 321**
**DE-B-2 321 511**
**FR-A-1 537 299**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Rolf, Meinhart, Dr., Berta- von- Suttner- strasse 24, D-5090 Leverkusen (DE)**
Erfinder: **Neeff, Rütger, Dr., Berta- von- Suttner- strasse 22, D-5090 Leverkusen (DE)**
Erfinder: **Müller, Walter, Ing.- grad, Pfarrer- Klein- Strasse 3, D-5090 Leverkusen 3 (DE)**
Erfinder: **Hederich, Volker, Dr., Hufelandstrasse 44, D-5000 Köln 80 (DE)**

**EP 0 101 954 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die Erfindung betrifft Isoindolazine, die in einer ihrer tautomeren Strukturen der Formel

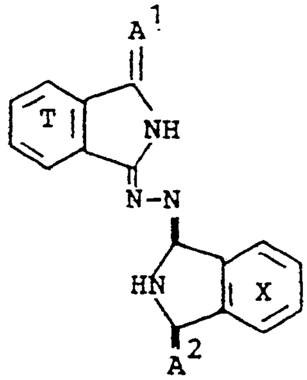

(I)

entsprechen, ihre Salze und Komplexe sowie Verfahren zur Herstellung dieser Verbindungen und ihre Verwendung.

In Formel (I) können die mit X und T bezeichneten Ringe substituiert sein.

$A^1$ und $A^2$ stehen für den zweiwertigen Rest einer Verbindung mit zwei austauschbaren Wasserstoffatomen an einem C- oder N-Atom, insbesondere für den zweiwertigen Rest einer methylenaktiven Verbindung, eines Amins, Hydrazins, Hydrazids oder Hydrazons.

Die Ringe X und T können beispielsweise 1,2,3- oder 4-Substituenten aus der Reihe Halogen, insbesondere Chlor und Brom; $C_1$-$C_6$-Alkyl, insbesondere Methyl und Ethyl; $C_1$-$C_6$-Alkoxy, insbesondere Methoxy- und Ethoxy; Carboxy; Nitro; Carbamoyl tragen.

Die zweiwertigen Reste $A^1$ und $A^2$ können abgeleitet sein von einer methylenaktiven Verbindung der Formel $CNCH_2R^1$ (II)

worin $R^1$ einen die Methylengruppe aktivierenden Rest bedeutet, beispielsweise Cyan; $C_1$-$C_6$-Alkoxy-$C_1$-$C_6$-alkoxycarbonyl; gegebenenfalls durch $C_1$-$C_6$-Alkyl, Benzyl, Naphthyl oder Phenyl substituiertes Carbamoyl, wobei Phenyl, Benzyl, Naphthyl, z.B. durch Chlor, Brom, $C_1$-$C_6$-Alkyl, $C_1$-$C_6$-Alkoxy, Nitro, Trifluormethyl, $C_1$-$C_6$-Alkylcarbonyl insbesondere Acetyl, Cyan, $C_1$-$C_6$-Alkylamino, Benzoylamino, Phthalimidyl, Carbamoyl, substituiert sein können; $C_1$-$C_6$-Alkylcarbonyl, insbesondere Acetyl; Benzoyl, $C_1$-$C_6$-Alkoxycarbonyl, Benzyloxycarbonyl, Phenoxycarbonyl, wobei Benzoyl, Benzyl und Phenoxy beispielsweise durch Halogen, wie Chlor und Brom, Nitro, $C_1$-$C_6$-Alkyl, Acylamino, insbesondere $C_1$-$C_6$-Alkylcarbonylamino, Phthalimidyl, substituiert sein können; gegebenenfalls durch Halogen, insbesondere Chlor und Brom, Nitro, Cyan, Trifluormethyl substituiertes Phenyl.

$R^1$ kann weiterhin für einen heterocyclischen Rest der Formel

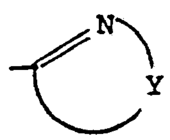

(III)

stehen, in dem Y für die restlichen Glieder eines, gegebenenfalls weitere Heteroatome enthaltenden 5- oder 6-gliedrigen Ringes steht. Beispiele für heterocyclische Reste $R^1$ sind:

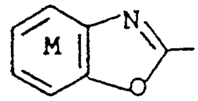
(IV)

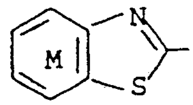
(V)

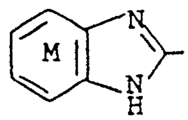
(VI)

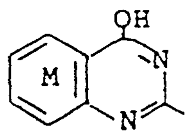
(VII)

Die mit M bezeichneten Ringe in den Formeln (IV) - (VII) können substituiert sein, z.B. durch Halogen, vorzugsweise Chlor und Brom; Nitro; $C_1$-$C_6$-Alkyl, vorzugsweise Methyl und Ethyl; $C_1$-$C_6$-Alkoxy, vorzugsweise Methoxy und Ethoxy.

Weiterhin können die Reste $A^1$ und $A^2$ von cyclischen methylenaktiven Verbindungen beispielsweise der folgenden Formeln abgeleitet sein:

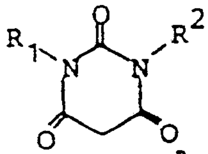

(VIII)

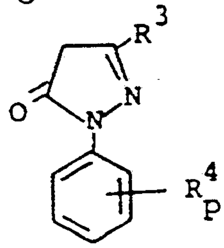

(IX)

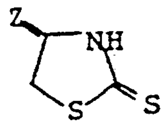

(X)

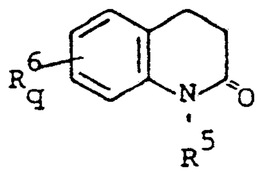

(XI)

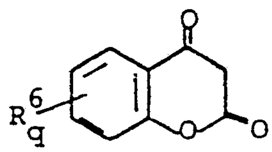

(XIa)

in den Formeln VIII - XIa bezeichnen z.B:

$R_1$, $R^2$ Wasserstoff, $C_1$-$C_6$-Alkyl; gegebenenfalls durch Halogen, wie Chlor und Brom, $C_1$-$C_6$-Alkyl, $C_1$-$C_6$-Alkoxy oder Nitro substituiertes Phenyl; - und β-Naphthyl;

$R^3$ $C_1$-$C_6$-Alkyl, vorzugsweise Methyl; Amino; $C_1$-$C_6$-Alkylcarbonyl; Carbamoyl, $C_1$-$C_6$-Alkoxycarbonyl;

$R^4$ $C_1$-$C_6$-Alkyl; $C_1$-$C_6$-Alkoxy; Halogen, vorzugsweise Chlor; Nitro;

p 0, 1 oder 2;

Z O oder S;

$R^5$ Wasserstoff oder $C_1$-$C_6$-Alkyl, vorzugsweise Methyl;

$R^6$ Halogen, vorzugsweise Chlor; Nitro;

q 0, 1, 2, 3 oder 4.

Stehen $A^1$ und/oder $A^2$ für den Rest eines Amins, so handelt es sich vorzugsweise um ein Amin der Formel

$R^7$ - $NH_2$ (XII),

in der

$R^7$ für einen gegebenenfalls maximal 3-fach durch Halogen, wie Chlor und Brom, Nitro, Cyan, Carbamoyl, Trifluormethyl, Phthalimidyl, $C_1$-$C_6$-Alkylcarbonylamino, vorzugsweise Acetylamino, Benzoylamino, das seinerseits durch Chlor, $C_1$-$C_6$-Alkyl, vorzugsweise Methyl oder Nitro weitersubstituiert sein kann, substituierten Phenylrest; α- oder β-Naphthyl oder einen Rest der Formeln

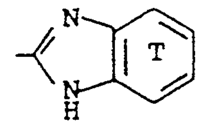

(XIII)

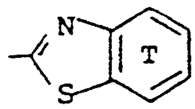

(XIV)

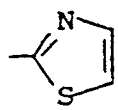

(XV)

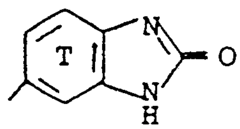

(XVI)

steht, wobei

T die oben angegebene Bedeutung hat.

Geeignete Hydrazinreste $A^1$ und/oder $A^2$ leiten sich vorzugsweise von Hydrazinen der Formel

$R^7 - NH - NH_2$ (XVII) ab, in der

$R^7$ die zu Formel (XII) angegebene Bedeutung hat.

$A^1$ und/oder $A^2$ in Formel (I) stehen weiterhin für ein Hydrazid der Formel

$R^8 - NH - NH_2$ (XVIII)

in der

$R^8$ vorzugsweise $C_1$-$C_6$-Alkylcarbonyl oder gegebenenfalls durch Halogen, wie Chlor und Brom, Nitro, Cyan, Carbamoyl, $C_1$-$C_6$-Alkylcarbonylamino, vorzugsweise Acetylamino, Benzoylamino, Phthalimidyl substituiertes Benzoyl bezeichnet.

Schließlich können sich $A^1$ und/oder $A^2$ von einem Hydrazon der Formel

$$R^9 - \overset{\displaystyle R^{10}}{\underset{}{CH}} = N - NH_2 \qquad \text{(XIX)}$$

ableiten, in der

$R^9$ vorzugsweise für Wasserstoff oder $C_1$-$C_6$-Alkyl und

$R^{10}$ vorzugsweise für gegebenenfalls durch Chlor, Nitro, $C_1$-$C_6$-Alkyl, $C_1$-$C_6$-Alkylcarbonylamino, vorzugsweise Acetyl, Phthalimidyl, Cyan, Carbamoyl oder Trifluormethyl substituiertes Phenyl oder einen heterocyclischen Rest der Formel

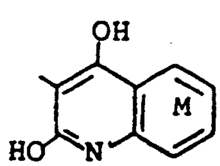

(XIX)

in der M die oben angegebene Bedeutung hat.

Bevorzugte Verbindungen entsprechen in einer ihrer tautomeren Strukturen der Formel

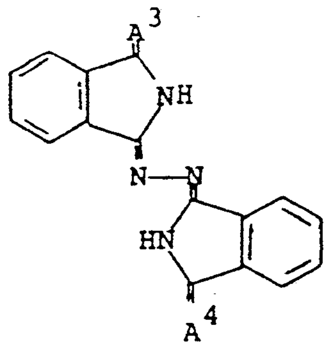

(XX)

in der
$A_3$, $A_4$ folgende Bedeutungen annehmen können:

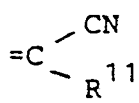 ,

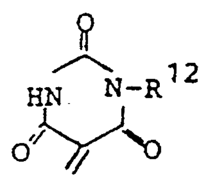 ,

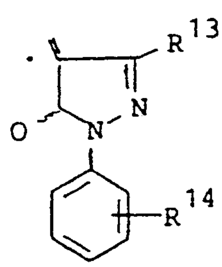 ,

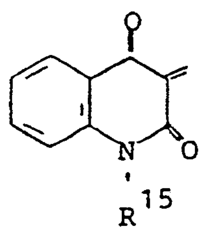 ,

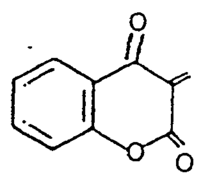

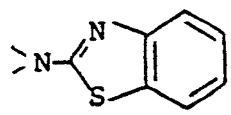 und,

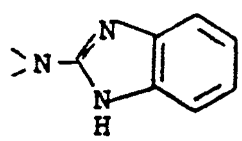

wobei bezeichnen
$R^{11}$ Cyan; Carbamoyl; $C_1$-$C_4$-Alkylcarbamoyl; Phenylcarbamoyl, wobei Phenyl durch Chlor, $C_1$-$C_4$-Alkyl, Nitro, $C_1$-$C_4$-Alkoxy weitersubstituiert sein kann; $C_1$-$C_4$-Alkoxycarbamoyl;

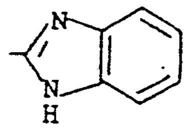 ; 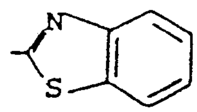 oder 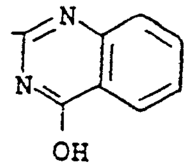 ;

$R^{12}$ Wasserstoff oder $C_1$-$C_4$-Alkyl;
$R^{13}$ Methyl, Ethoxycarbonyl oder Amino;
$R^{14}$ Chlor, Methyl oder Nitro;
$R^{15}$ Wasserstoff oder Methyl.

Besonders bevorzugt sind Verbindungen der Formel

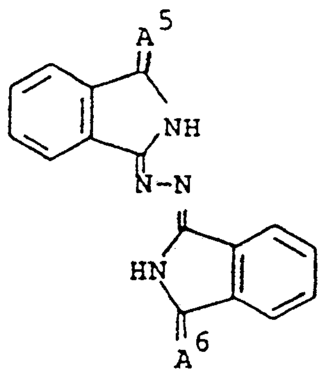

in der $A^5$ $A^6$ folgende Bedeutungen haben:

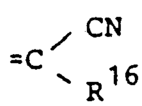 , 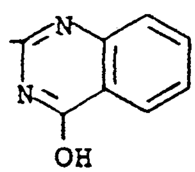 , 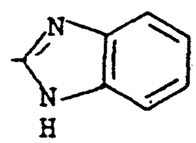

und

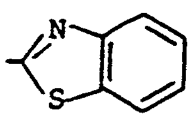

wobei $R^{16}$ für Cyan, Carbamoyl, Methyl carbamoyl oder Ethylcarbamoyl steht.

Von besonderem Interesse im Rahmen der vorliegenden Erfindung sind auch die Verbindungen der Formel (I), bei denen $A^1$ und $A^2$ gleich sind.

Bei den Salzen und Komplexen der Verbindungen der Formel (I) handelt es sich vorzugsweise um Ni-, Zn-, Cr-, Fe-, Cu-, Co-, Mn-, Ba-, Sr-, Ca- oder Cd-Verbindungen.

Zur Herstellung der Verbindungen der Formel (I) bieten sich mehrere Verfahren an.

1. 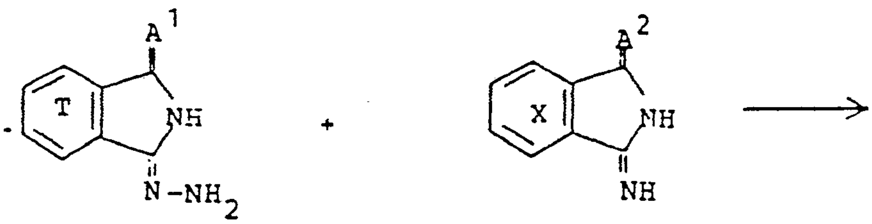 (I)

(XXI) (XXII)

Durch Kondensation der Hydrazinoverbindungen (XXI) mit dem Imin (XXII), wobei $A^1$, $A^2$, X und T die obengenannte Bedeutung haben, gelangt man unter Ammoniakabspaltung zu den symmetrischen oder unsymmetrischen Dimeren (I).

Die Reaktion wird zweckmäßig in einem organischen Lösungsmittel unter Zusatz einer Säure bei Temperaturen zwischen 20 und 150°C, bevorzugt zwischen 50 und 120°C durchgeführt.

Geeignete organische Lösungsmittel sind Alkohole wie Methanol, Ethanol, Amylalkohol oder Glykolmonoalkylether; Aromaten wie Chlorbenzol, Nitrobenzol, Toluol; amidische Lösungsmittel wie Formamid, Dimethylformamid, N-Methylpyrrolidon; oder Säuren wie Ameisensäure oder Essigsäure.

Geeignete Säuren sind anorganische wie Salzsäure, Schwefelsäure oder Phosphorsäure bzw. organische wie Ameisensäure, Essigsäure, Chloressigsäure, Dichloressigsäure, Oxalsäure, Benzolsulfonsäure, p-Toluolsulfonsäure.

2 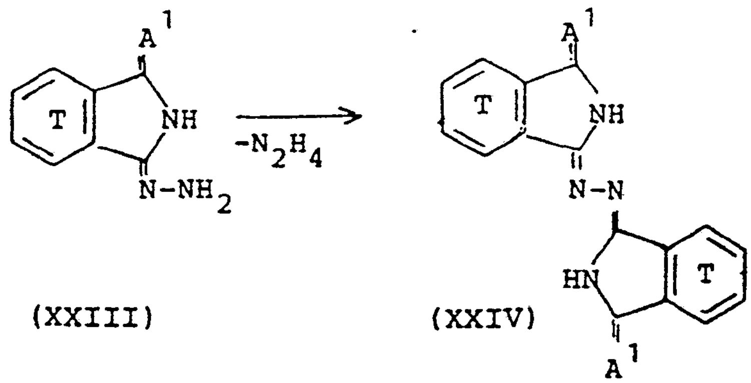


(XXIII) (XXIV)

Durch saure Dimerisierung der Hydrazine (XXIII) sind unter Abspaltung von Hydrazin die Pigmente (XXIV) zugänglich.

Anstatt des einheitlichen Ausgangsmaterials (XXIII) kann dieses auch in beliebigem Verhältnis im Gemisch mit den Hydrazin (XXV)

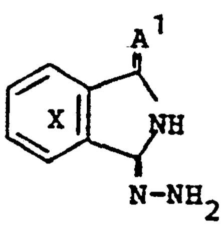 (XXV)

in die Reaktion eingesetzt werden. Es entstehen dann die entprechenden gemischten Dimere.

Ebenso können in die Mischkondensation die zu XXIII und XXV analogen Hydrazine mit von $A^1$ verschiedenen Resten $A^2$ eingesetzt werden.

Die Azin-Synthese durch Dimerisierung von 2 Mol Hydrazon ist literaturbekannt. Sie wird zweckmäßig unter sauren Bedingungen bei erhöhten Temperaturen durchgeführt. Z.B. kann in einem organischen Lösungsmittel mit einer Säure wie unter 1. dargestellt gearbeitet werden, wobei mindestens 1 Mol-Äquivalent an Säure zugesetzt wird. Zweckmäßigerweise führt man die Reaktion bei 80 - 200°C, gegebenenfalls unter Druck, durch. Daneben kann die Dimerisierung auch in anorganischen Säuren, z.B. Polyphosphorsäure, durchgeführt werden.

3. Durch saure Dimerisierung der Alkoxymethylenhydrazine XXVI bis XXIX, gegebenenfalls in Mischung untereinander, unter den für die freien Hydrazine XXIII und XXV angegebenen Reaktionsbedingungen,

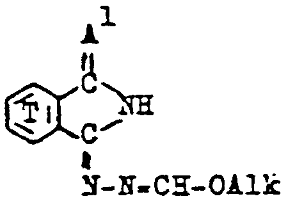

XXVI

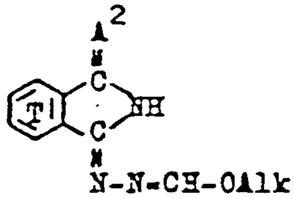

XXVII

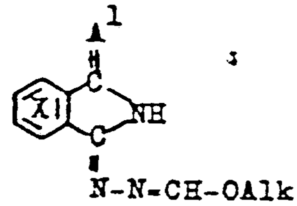

XXVIII

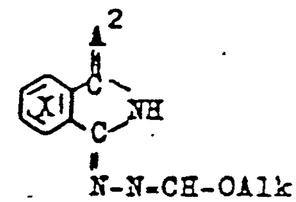

XXIX

wobei der Rest Alk für einen $C_1$-$C_6$-Alkyl-, vorzugsweise den Ethylrest steht.

4. Durch Dimerisierung der Alkoxy-methylen-hydrazinoverbindungen XXVI bis XXIX bei Gegenwart von methylenaktiven Verbindungen.

Die Reaktion wird zweckmäßig in einem inerten organischen Lösungsmittel bei Temperaturen zwischen 50-180°C, vorzugsweise 80-130°C durchgeführt.

Geeignete Lösungsmittel sind Ethylenglykolmonoalkylether, Dimethylformamid, Dimethylacetatamid, N-Methylpyrrolidon, Dimethylsulfoxid oder Sulfolan.

Als methylenaktive Verbindungen kommen solche in Frage, wie sie einleitend zur Einführung der Reste $A^1$ und $A^2$ beschrieben sind.

Die Umsetzung zwischen der Alkoxy-methylen-hydrazinverbindung und der methylenaktiven Verbindung wird dabei vorzugsweise im Molverhältnis 1:1 durchgeführt, ein größerer Überschuß an methylenaktiver Verbindung wirkt sich nicht nachteilig aus.

Verbindungen der Formel (I) sind darüber hinaus durch Umsetzung des Imins (XXI) mit Hydrazin zugänglich.

2. 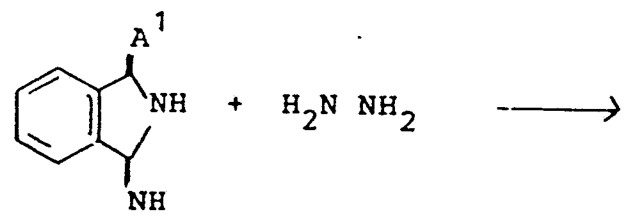

(I)

(XXI)

Die Umsetzung wird zweckmäßig in einem Lösungsmittel unter sauren Bedingungen bei Temperaturen zwischen 40 und 160°C durchgeführt. Das Hydrazin kann dabei als freie Base oder auch als Salz, z.B. Chlorid oder Sulfat eingesetzt werden. Geeignete Lösungsmittel sind Wasser-, Alkabale wie Methanol, Ethanol, n-Butanol, Glykol und dessen Ether, z.B. Ethylenglykolmonomethylether, Ethylenglykolmonoethylether, Ethylenglykoldimethylether; organische Säuren wie Ameisensäure, Essigsäure oder Propionsäure; aromatische Lösungsmittel wie Toluol, o-Xylol, Chlorbenzol, 1,2-Dichlorbenzol, 1,3-Dichlorbenzol, Nitrobenzol; amidische Lösungsmittel wie Dimethylformamid, N-Methylpyrolidon oder Dimethylacetamid, Dimethylsulfoxid oder Tetramethylensulfon.

Geeignete Säuren sind anorganische wie Salzsäure, Schwefelsäure oder Phosphorsäure bzw. organische wie Ameisensäure, Essigsäure, Chloressigsäure, Dichloressigsäure, Oxalsäure, Benzosulfonsäure oder p-Toluolsulfonsäure.

Die Herstellung der Salze bzw. Komplexe der Verbindungen der Formel (I) erfolgt nach an sich bekannten Verfahren, beispielsweise indem man die Verbindungen mit den entsprechenden Metalsalzen in Dimethylformamid, N-Methylpyrrolidon oder Formamid einige Zeit (ca. 5-10 h) auf höhere Temperatur (ca. 140°C) erhitzt.

Die Verbindungen der Formel (I) fallen in einer für die Pigmentanwendung geeigneten Form an oder können durch an sich bekannte Nachbehandlungsverfahren in die geeignete Form überführt werden, z.B. durch Lösen oder Quellen in starken anorganischen Säure wie Schwefelsäure und Austragen auf Eis. Die Feinverteilung kann

auch durch Mahlen mit oder ohne Mahlhilfsstoffen wie anorganischen Salzen oder Sand, gegebenenfalls in Anwesenheit von Lösungsmitteln wie Toluol, Xylol, Dichlorbenzol oder N-Methylpyrrolidon erzielt werden. Farbstärke und Transparenz des Pigmentes können durch Variation der Nachbehandlung beeinflußt werden. Die Farbmittel der Formel (I) eignen sich aufgrund ihrer Licht- und Migrationsechtheit für die verschiedensten Pigmentapplikationen. So können sie zur Herstellung von sehr echt pigmentierten Systemen, wie Mischung mit anderen Stoffen, Zubereitungen, Anstrichmitteln, Druckfarben, gefärbtem Papier und gefärbten makromolekularen Stoffen verwendet werden. Unter Mischung mit anderen Stoffen können z.B. solche mit anorganischen Weißpigmenten wie Titandioxid (Rutil) oder mit Zement verstanden werden. Zubereitungen sind z.B. Flushpasten mit organischen Flüssigkeiten oder Teige und Feinteige mit Wasser, Dispergiermitteln und gegebenenfalls Konservierungsmitteln. Die Bezeichnung Anstrichmittel steht z.B. für physikalisch oder oxidativ trocknende Lacke, Einbrennlacke, Reaktionslacke, Zweikomponentenlacke, Dispersionsfarben für wetterfeste Überzügen und Leimfarben. Unter Druckfarben sind solche für den Papier-, Textil- und Blechdruck zu verstehen. Die makromolekularen Stoffe können natürlichen Ursprungs sein wie Kautschuk, durch chemische Modifikation erhalten werden wie Acetylcellulose, Cellulosebutyrat oder Viskose oder synthetisch erzeugt werden wie Polymerisate, Polyadditionsprodukte und Polykondensate. Genannt seien plastische Massen wie Polyvinylchlorid, Polyvinylacetat, Polyvinylpropionat, Polyolefine, z.B. Polyethylen oder Polyamide, Superpolyamide, Polymerisate und Mischpolymerisate aus Acrylester, Methacrylestern, Acrylnitril, Acrylamid, Butadien, Styrol sowie Polyurethane und Polycarbonate. Die mit den beanspruchten Produkten pigmentierten Stoffe können in beliebiger Form vorliegen. Die Pigmente der Formel (I) sind weiterhin ausgezeichnet wasserecht, ölecht, säureecht, kalkecht, alkaliecht, lösungsmittelecht, überlackierecht, überspritzecht, sublimierecht, hitzebeständig, vulkanisierbeständig, sehr ergiebig und in plastischen Massen gut verteilbar. Aus DE-A- 2142245 und 2504521 sind den erfindungsgemäßen Isoindolazinen ahuliche Verbindungen beschreiben. Gemisch den Verbindungen des Standes de Technik jeichnen sich die Isoindolazine nach der Erfindung überraschen den der weire durch bessere überlackierechtheiten aus.

**Beispiel 1**

a) In ein Gemisch aus 300 ml Dimethylformamid und 10 ml 96 %ige Schwefelsäure trägt man 30 g 1-Hydrazino-3-(cyano-N-phenylcarbamoylmethylen)-isoindolenin ein und rührt 30 Minuten bei 130°C. Den ausgefallenen Niederschlag saugt man heiß ab, wäscht mit Dimethylformamid und Methanol und erhält nach dem Trocknen 21 g (74 % der Theorie) einer rot-orangefarbenen Substanz der Struktur

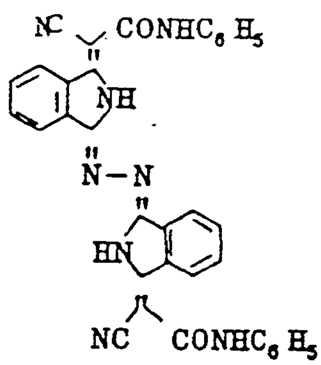

Verwendet man anstelle von Schwefelsäure andere Säuren wie Phosphorsäure, Salzsäure, Dichloressigsäure oder Essigsäure, gelangt man zu ähnlichen Ergebnissen.

b) In ein Gemisch von 200 ml Dimethylformamid und 15 ml Eisessig gibt man 10 g 1-Hydrazino-3-(cyano-N-phenyl-carbamoylmethylen)-isoindolenin und 9,5 g 1-Amino-3-(cyano-N-phenylcarbamoylmethylen)-iso-indolenin und rührt 2 Stunden bei 140°C. Den entstandenen Niederschlag saugt man heiß ab, wäscht mit Dimethylformamid und Methanol gut nach und erhält nach dem Trocknen 13 g (68 % der Theorie) einer Verbindung, die spektroskopisch mit dem nach Beispiel 1a erhaltenen Material übereinstimmt, jedoch etwas abweichende coloristische Eigenschaften besitzt.

**Beispiel 2**

In ein Gemisch von 200 ml Dimethylformamid und 10 ml 96 %ige Schwefelsäure trägt man 15 g 1-Hydrazino-3-(cyanocarbamoylmethylen)-isoindolenin und rührt unter Stickstoff 1 Stunde bei 80°C. Den entstandenen Niederschlag saugt man heiß ab, wäscht mit Dimethylformamid und Methanol gut nach und erhält nach dem

Trocknen 9,8 g (70 % der Theorie) eines farbstarken Gelbpigmentes der Formel

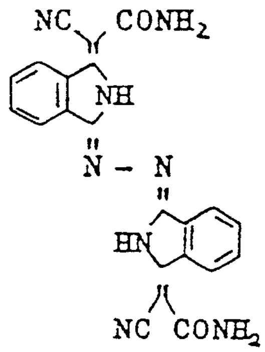

**Beispiel 3**

a) In ein Gemisch aus 300 ml Dimethylformamid und 20 ml Essigsäure gibt man 20 g 1-Amino-3-(cyano-N-methylcarbamoylmethylen)-isoindolenin und setzt unter Stickstoff bei 25°C 5,5 g Hydrazinhydrat (125 % der Theorie) langsam zu. Nach 2 Stunden bei 40°C werden 10 ml Schwefelsäure (96 %) zugesetzt und 1 Stunde bei 140°C gerührt. Nach der üblichen Isolation werden 15,2 g (82 % der Theorie) eines rotstichig-gelben Pigmentes der Formel

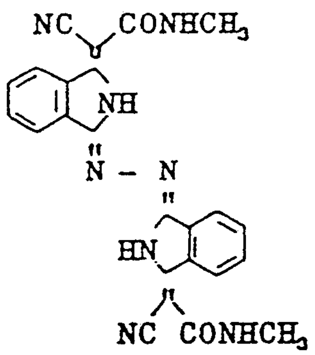

erhalten.

b) In ein Gemisch aus 120 ml Nitrobenzol und 10 ml Eisessig gibt man 13 g 1-Amino-3-(cyano-N-methylcarbamoylmethylen)-isoindolenin und setzt bei 110°C 2 ml Hydrazinhydrat zu. Es wird noch 2 Std. bei 110°C nachgerührt, dann abgesaugt und gewaschen. 11, 7 g (90 %) eines rotstichig gelben Pigmentes der unter 3a genannten Struktur.

Nach dem in Beispiel 1a genannten Verfahren werden bei Verwendung der in der nachfolgenden Tabelle aufgeführten Hydrazone als Ausgangsmaterialien entsprechende Dimere mit den angegebenen Farbtönen erhalten.

| Beispiel Nr. | Ausgangs-Material | Farbton des erhaltenen Pigments |
|---|---|---|
| 4 | 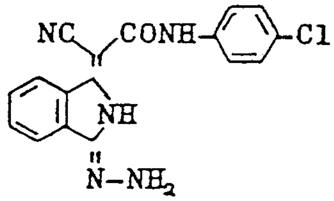 | rot |
| 5 | 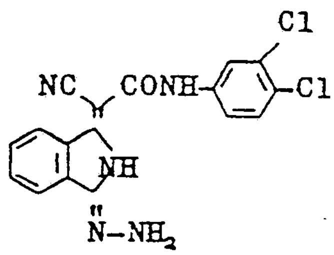 | rot |
| 6 | 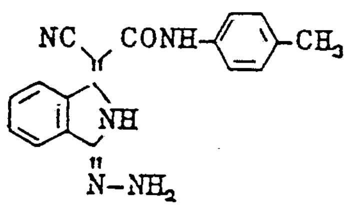 | rot |
| 7 | 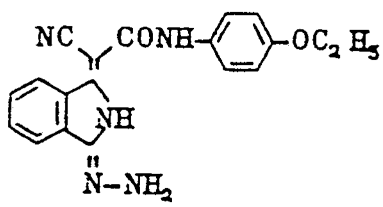 | rot |
| 8 | 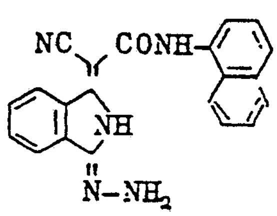 | gelb |

| Beispiel Nr. | Ausgangs-Material | Farbton des erhaltenen Pigments |
|---|---|---|
| 9 | 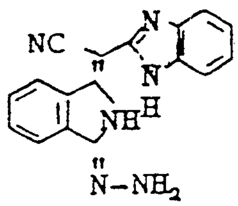 | rot |
| 10 | 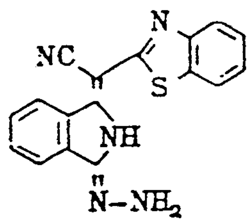 | rot |
| 11 | 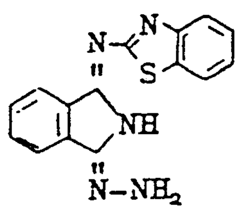 | orange |
| 12 | 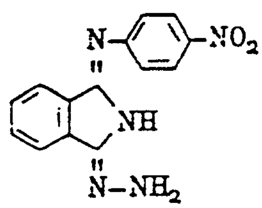 | orange |
| 13 | 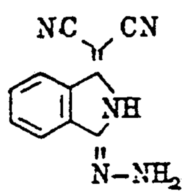 | gelb |

| Beispiel Nr. | Ausgangs-Material | Farbton des erhaltenen Pigments |
|---|---|---|
| 14 | 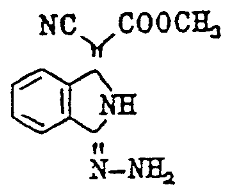 | gelb |
| 15 | 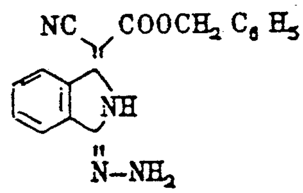 | gelb |
| 16 | 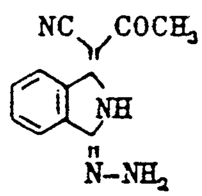 | gelb |
| 17 | 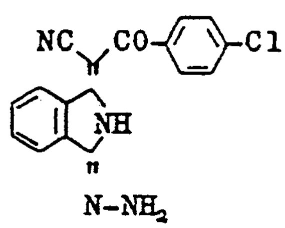 | gelb |
| 18 | 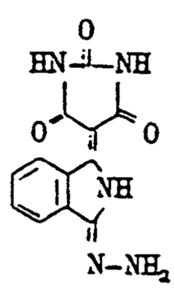 | orange |

| Beispiel Nr. | Ausgangs-Material | Farbton des erhaltenen Pigments |
|---|---|---|
| 19 | 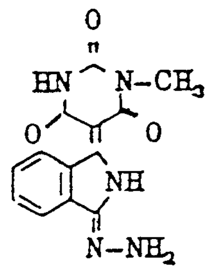 | orange |
| 20 | 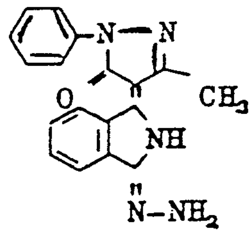 | braun |
| 21 | 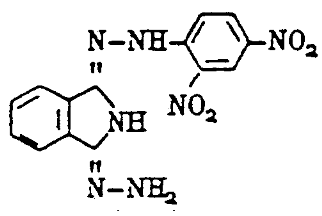 | orange |
| 22 | 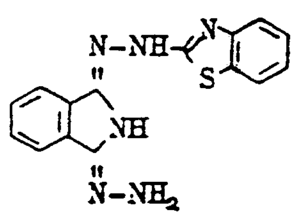 | orange |
| 23 | 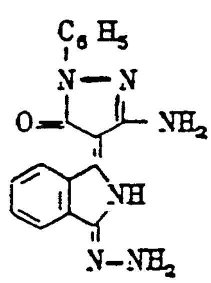 | braun |

| Beispiel Nr. | Ausgangs-Material | Farbton des erhaltenen Pigments |
|---|---|---|
| 24 | 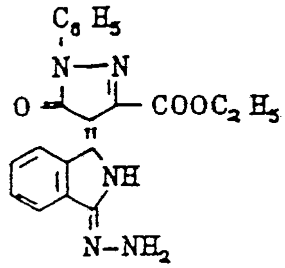 | braun |
| 25 | 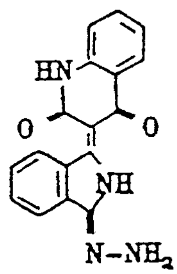 | rot |
| 26 | 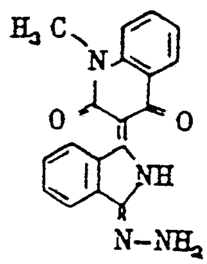 | rot |
| 27 | 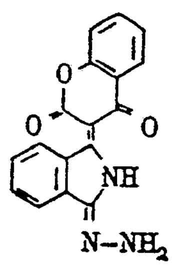 | rot |
| 28 | 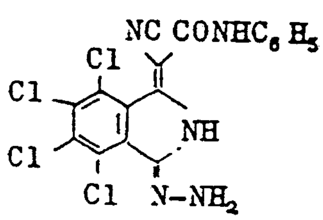 | rot |

| Beispiel Nr. | Ausgangs-Material | Farbton des erhaltenen Pigments |
|---|---|---|
| 29 | 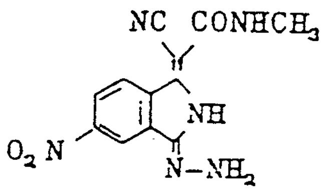 | orange |
| 30 | 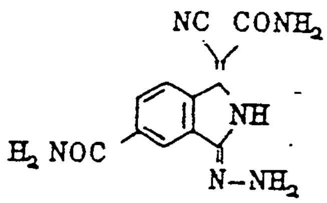 | orange |

**Beispiel 31**

In ein Gemisch von 100 ml Dimethylformamid und 8 ml Schwefelsäure (96 %) gibt man 12 g 1-Hydrazino-3-(cyano-chinazolinonyl-2-methylen)-isoindolenin und rührt 15 Minuten bei 130°C. Nach Absaugen und Waschen erhält man 8,0 g (70 % der Theorie) eines roten Pigmentes der Formel

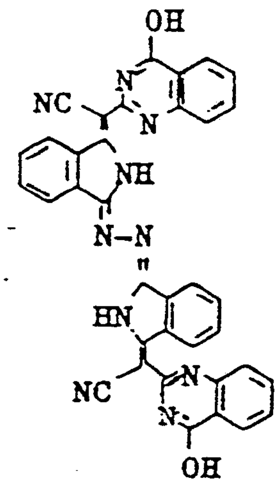

**Beispiel 32**

In ein Gemisch von 300 ml Dimethylformamid und 10 ml Schwefelsäure (96 %) gibt man 24,1 g (0,1 Mol) 1-Hydrazino-3-(cyano-N-methylcarbamoylmethylen)-isoindolenin und 30,3 g (0,1 Mol) 1-Hydrazino-3-(cyano-N-phenylcarbamoylmethylen)-isoindolenin. Nach einer Stunde bei 140° C saugt man den organgefarbenen Niederschlag ab und erhält nach Waschen und Trocknen 38 g (74 % der Theorie) eines Pigment-Gemisches der Struktur

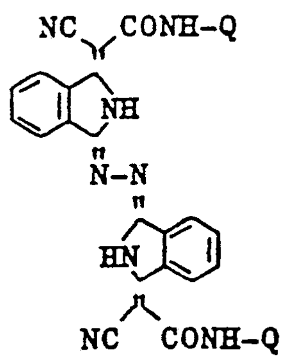

(XXXII)

wobei in statistischer Verteilung jeweils 50 % der Reste Q Methyl bedeuten und die restlichen 50 % Phenyl.

**Beispiel 33**

9,1 g (0,03 Mol) 1-Hydrazino-3-(cyano-N-phenyl -carbamoyl-methylen)-iso-indolenin und 7,7 g (0,03 Mol) 1-Amino-3-(2,4,6-trioxo-pyrimidinyl)-iso-indolenin werden in einer Mischung aus 120 ml Dimethylformamid und 8 ml Eisessig 1 3/4 Stunden am Rückfluß erhitzt. Nach dem Erkalten wird der kristalline Niederschlag abgesaugt, mit Methanol und Wasser gewaschen und getrocknet. Man erhält 12,2 g (75 % der Theorie) eines orangeroten Pigments der Struktur

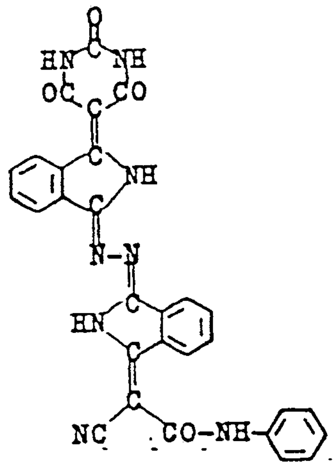

Nach dem in Beispiel 33 genannten Verfahren werden bei Verwendung der in der nachfolgenden Tabelle aufgeführten Ausgangsmaterialien die entsprechenden unsymmetrischen Isoindolazine mit den angegebenen Farbtönen erhalten.

| Beispiel Nr. | Ausgangsmaterial Hydrazon | Ausgangsmaterial Imin | Farbton des erhaltenen Pigment |
|---|---|---|---|
| 34 | 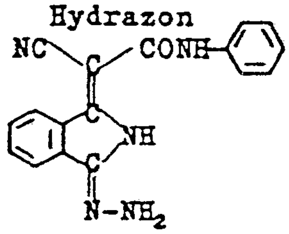 | 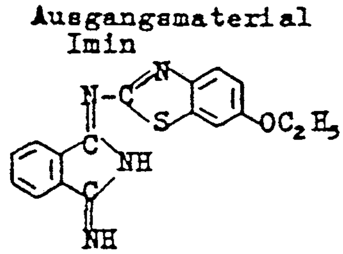 | orange |
| 35 | " | 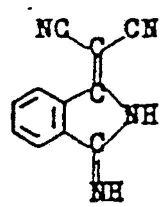 | orange |
| 36 | 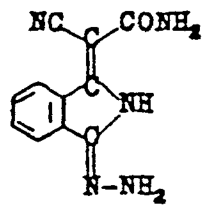 | 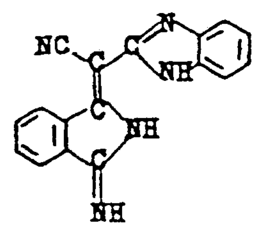 | rot |
| 37 | 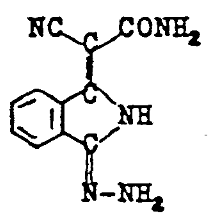 | 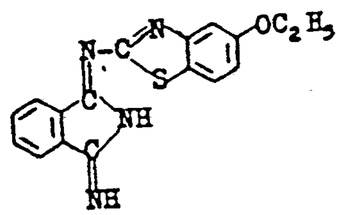 | rot |
| 38 | " | 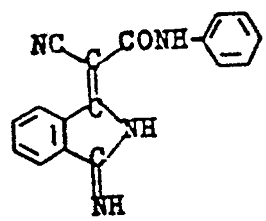 | orange |

| Beispiel Nr. | Ausgangsmaterial Hydrazon | Ausgangsmaterial Imin | Farbton des erhaltenen Pigments |
|---|---|---|---|
| 39 | 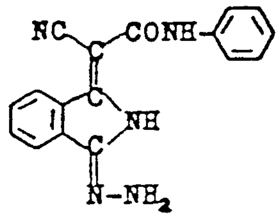 | 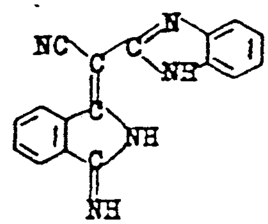 | rot |
| 40 | 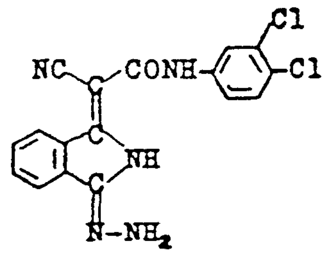 | 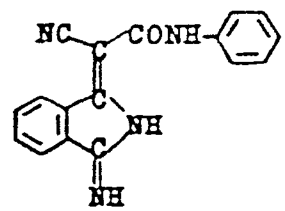 | orange |
| 41 | " | 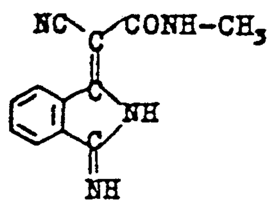 | orange |

**Beispiel 42**

a) 12 g (0,033 Mol) 1-Ethoxymethylenhydrazino-3-(cyano-N-phenyl-carbamoyl-methylen)-isoindolenin und 7,5 g (0,043 Mol) 1-Phenyl-3-methyl-pyrazolon(-5) werden in 150 ml Dimethylformamid 3 1/4 Std auf 110°C erhitzt. Man kühlt auf ca. 60°C ab, saugt den Niederschlag ab und erhält nach dem Waschen mit Dimethylformamid und Methanol 7,4 g (77,2 % d.Th.) eines Pigmentes, das mit dem in Beispiel 1 identisch ist.

b) Ersetzt man im Beispiel 42a das 1-Phenyl-3-methyl-pyrazolon(-5) durch äquimolare Mengen Malondinitril oder Naphthindandion, so erhält man das gleiche Pigment mit 89,6 bzw. 81,3 % Ausbeute.

**Beispiel 43**

a) 6,7 g (0,017 Mol) 1-Ethoxymethylenhydrazino-3-(cyano-N-p-chlorphenyl-carbamoyl-methylen)-imisoindolenin und 3,1 g 1-Phenyl-3-methyl-pyrazolon(-5) (0,018 Mol) werden in 80 ml Dimethylformamid 1 Std. auf 110°C erwärmt und anschließend bei 70°C abgesaugt. Man erhält nach dem Waschen und Trocknen 3,9 g (70,9 % der Theorie) eines roten Pigmentes, das mit dem in Beispiel 4 identisch ist.

b) Führt man die gleiche Umsetzung statt in Dimethylformamid in 80 ml Dimethylsulfoxid durch, so werden 2,9 g (52,9 % der Theorie) des gleichen Pigmentes erhalten.

**Beispiel 44**

5 g 1-Ethoxymethylenhydrazino-3-(cyano-N-phenyl -carbamoyl-methylen-) isoindolenin werden in 80 ml Dimethylformamid und 1,7 ml konzentrierter Schwefelsäure auf 130° C erhitzt und 30 Minuten bei dieser Temperatur gerührt. Anschließend wird auf 60° C abgekühlt, abgesaugt, mit Dimethylformamid, Methanol und Wasser gewaschen und getrocknet. Die Ausbeute an orangerotem Pigment, das mit dem nach Beispiel 1 erhaltenen identisch ist, beträgt 3,0 g (75 % der Theorie).

**Beispiel 45** (Anwendungsbeispiel)

8 g feingemahlenes Pigment gemäß Beispiel la werden in 92 g eines Einbrennlackes folgender Zusammensetzung dispergiert:
33 % Alkydharz
15 % Melaminharz
5 % Glykolmonomethylether
34 % Xylol
13 % Butanol
Als Alkydharze kommen Produkte auf Basis synthetischer und pflanzlicher Fettsäure wie Kokosöl, Rizinusöl, Rizinenöl, Leinöl u.a. in Frage. Anstelle von Melaminharze können Harnstoffharze verwendet werden.

Nach erfolgter Dispergierung wird der pigmentierte Lack auf Papier-, Glas-, Kunststoff- oder Metall-Folien aufgetragen und 30 Minuten bei 130° C eingebrannt. Die Lackierungen besitzen sehr gute Licht- und Wetterbeständigkeit sowie gute Überlackierechtheit.

**Beispiel 46** (Anwendungsbeispiel)

0,2 g Pigment nach Beispiel 1a werden mit 100 g Polyethylen-, Polypropylen- oder Polystyrolgranulat gemischt. Die Mischung kann entweder bei 220 bis 280° C direkt in einer Spritzgußmaschine verspritzt, oder in einer Strangpresse zu gefärbten Stäben bzw. auf dem Mischwalzwerk zu gefärbten Felle verarbeitet werden. Die Stäbe bzw. Felle werden gegebenenfalls granuliert und in einer Spritzgußmaschine verspritzt.

Die organgefarbenen Formlinge besitzen sehr gute Lichtund Migrationsechtheit. In ähnlicher Weise können bei 280 - 300° C, gegebenenfalls unter Stickstoffatmosphäre, synthetische Polyamide aus Caprolactam oder Adipinsäure und Hexamethylendiamin oder die Kondensate aus Terephthalsäure und Ethylenglykol gefärbt werden.

**Beispiel 47** (Anwendungsbeispiel)

Mit einer Druckfarbe, hergestellt durch Anreiben von 35 g Pigment nach Beispiel 1a und 65 g Leinöln und Zugabe von 1 g Siccativ (Co-Naphthenat, 50 %ig in Testbenzin) werden orangefarbene Offset-Drucke hoher Brillanz und Farbstärke und sehr gute Licht- und Lackierechtheiten erhalten. Verwendung dieser Druckfarbe in Buch-, Licht-, Stein- oder Stahlstichdruck führt zu orangefarbenen Drucken ähnlicher Echtheiten. Verwendet man das Pigment zur Färbung von Blechdruck- oder niedrigviskosen Tiefdrucken oder Drucktinten, erhält man orangefarbene Drucke ähnlicher Echtheiten.

**Patentansprüche**

1. Isoindolazine, die in einer ihrer tautomeren Strukturen der Formel

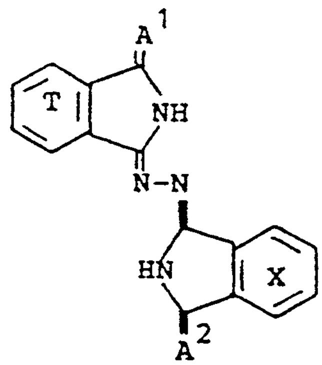

(I)

entsprechen,
wobei die mit X und T bezeichneten Ringe substituiert sein können und
$A^1$ und $A^2$ für den zweiwertigen Rest einer Verbindung mit zwei austauschbaren Wasserstoffatomen an einem C- oder N-Atom, insbesondere für den zweiwertigen Rest einer methylenaktiven Verbindung, eines Amins, Hydrazins, Hydrazids oder Hydrazons stehen sowie die Salze und Komplexe dieser Verbindungen.

2. Verbindungen gemäß Anspruch 1, bei denen die Ringe X und T durch 1,2,3- oder 4 Substituenten aus der Reihe Halogen, insbesondere Chlor und Brom; $C_1$-$C_6$-Alkyl; insbesondere Methyl und Ethyl; $C_1$-$C_6$-Alkoxy; insbesondere Methoxy- und Ethoxy; Carboxy; Nitro; Carbamoyl substituiert sind.

3. Verbindungen gemäß den Ansprüchen 1 und 2, bei denen $A^1$ und/oder $A^2$ für

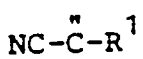 ; 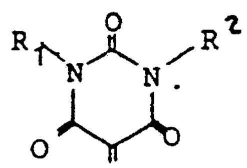 ; 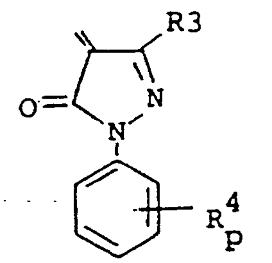 ;

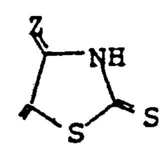 ; 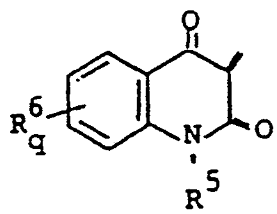 oder 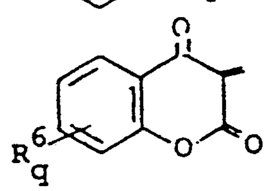

stehen, wobei
$R^1$ Cyan; $C_1$-$C_6$-Alkoxy-$C_1$-$C_6$-alkoxycarbonyl; gegebenenfalls durch $C_1$-$C_6$-Alkyl, Benzyl, Naphthyl oder Phenyl substituiertes Carbamoyl, wobei Phenyl, Benzyl, Naphthyl, z.B. durch Chlor, Brom, $C_1$-$C_6$-Alkyl, $C_1$-$C_6$-Alkoxy, Nitro, Trifluormethyl, $C_1$-$C_6$-Alkylcarbonyl, insbesondere Acetyl, Cyan, $C_1$-$C_6$-Alkylamino, Benzoylamino, Phthalimidyl, Carbamoyl, substituiert sein können; $C_1$-$C_6$-Alkylcarbonyl, insbesondere Acetyl, Benzoyl, $C_1$-$C_6$-Alkoxycarbonyl, Benzyloxycarbonyl, Phenoxycarbonyl, wobei Benzoyl, Benzyl und Phenoxy beispielsweise durch Halogen, wie Chlor und Brom, Nitro, $C_1$-$C_6$-Alkyl, Acylamino, insbesondere $C_1$-$C_6$-Alkylcarbonylamino, phthalimidyl, substituiert sein können; gegebenenfalls durch Halogen, insbesondere Chlor und Brom, Nitro, Cyan, Trifluormethyl substituiertes Phenyl, oder einen heterocyclischen Rest der Formel

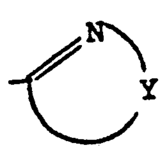

bezeichnet,
in dem Y für die restlichen Glieder eines, gegebenenfalls weitere Heteroatome enthaltenden 5- oder 6-gliedrigen Ringes steht, vorzugsweise eines heterocyclischen Rest der Formeln

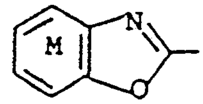

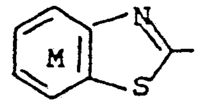

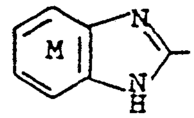

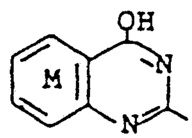

wobei die mit M bezeichneten Ringe z.B. durch Halogen, vorzugsweise Chlor und Brom, Nitro, $C_1$-$C_6$-Alkyl, vorzugsweise Methyl und Ethyl, $C_1$-$C_6$-Alkoxy, vorzugsweise Methoxy und Ethoxy substituiert sein können;

$R_1$, $R^2$ Wasserstoff-, $C_1$-$C_6$-Alkyl; gegebenenfalls durch Halogen, wie Chlor und Brom, $C_1$-$C_6$-Alkyl, $C_1$-$C_6$-Alkoxy oder Nitro substituiertes Phenyl; α- und β-Naphthyl bezeichnen;

$R^3$ für $C_1$-$C_6$-Alkyl, vorzugsweise Methyl; Amino; $C_1$-$C_6$-Alkylcarbonyl; Carbamoyl; $C_1$-$C_6$-Alkoxy-carbonyl steht;

$R^4$ für $C_1$-$C_6$-Alkyl; $C_1$-$C_6$-Alkoxy; Halogen, vorzugsweise Chlor; Nitro steht;

p 0, 1 oder 2;

Z O oder S;

$R^5$ Wasserstoff oder $C_1$-$C_6$-Alkyl, vorzugsweise Methyl;

$R^6$ Halogen, vorzugsweise Chlor; Nitro und

q 0, 1, 2, 3 oder 4 bezeichnen.

4. Verbindungen gemäß den Ansprüchen 1 und 2, bei denen $A^1$ und/oder $A^2$ für einen Rest

FIG38/10

N-$R^7$ stehen

in der

$R^7$ für einen gegebenenfalls maximal 3-fach durch Halogen, wie Chlor und Brom, Nitro, Cyan, Carbamoyl, Trifluormethyl, Phthalimidyl, $C_1$-$C_6$-Aklylcarbonylamino, vorzugsweise Acetylamino, Benzoylamino, das seinerseits durch Chlor, $C_1$-$C_6$-Alkyl, vorzugsweise Methyl oder Nitro weitersubstituiert sein kann, substituierten Phenylrest; α - oder β-Naphthyl oder einen Rest der Formeln

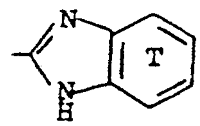

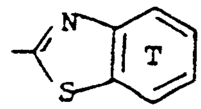

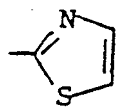

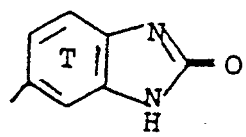

steht, wobei

T die oben angegebene Bedeutung hat.

5. Verbindungen gemäß den Ansprüchen 1 und 2, bei denen $A^1$ und/oder $A^2$ für einen Rest der Formel

$$R^7 - NH - N<$$

stehen,

wobei $R^7$ die in Anspruch 4 angegebene Bedeutung hat.

6. Verbindungen gemäß den Ansprüchen 1 und 2, bei denen $A^1$ und/oder $A^2$ für einen Rest der Formel

$$R^8 - NH - N<$$

stehen, wobei

$R^8$ $C_1$-$C_6$-Alkylcarbonyl oder gegebenenfalls durch Halogen, wie Chlor und Brom, Nitro, Cyan, Carbamoyl, $C_1$-$C_6$-Alkylcarbonylamino, vorzugsweise Acetylamino, Phthalimidyl substituiertes Benzoyl bezeichnet.

7. Verbindungen gemäß den Ansprüchen 1 und 2, bei denen $A^1$ und/oder $A^2$ für einen Rest der Formel

$$R^9 - \overset{R^{10}}{\overset{|}{C}} = N - N<$$

stehen, in der

$R^9$ für Wasserstoff oder $C_1$-$C_6$-Alkyl und

$R^{10}$ für gegebenenfalls durch Chlor, Nitro, $C_1$-$C_6$-Alkyl, $C_1$-$C_6$-Alkylcarbonylamino, vorzugsweise Acetylamino, phthalimidyl, Cyan, Carbamoyl oder Trifluormethyl substituiertes phenyl oder einen heterocyclischen Rest der Formel

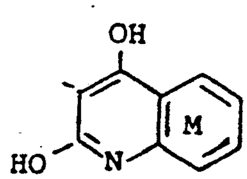

in der M die oben angegebene Bedeutung hat, stehen.

8. Verfahren zur Herstellung von Verbindungen der Formel (I), dadurch gekennzeichnet, daß man ein Hydrazon der Formel

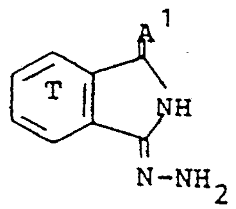

mit einem Imin der

Formel

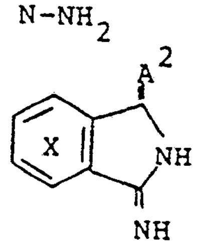

kondensiert.

9. Verfahren zur Herstellung von Verbindungen der Formel (I), dadurch gekennzeichnet, daß man ein Hydrazon der Formel

FIG45/30

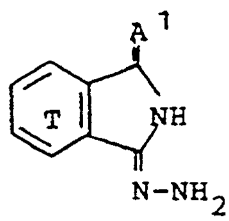

unter sauren Bedingungen kondensiert.

10. Verfahren zum pigmentieren organischer makromolekularer Stoffe, dadurch gekennzeichnet, daß man Isoindolazine gemäß den Ansprüchen 1 - 7 verwendet.

**Claims**

1. Isoindolazines which, in one of their tautomeric structures correspond to the formula

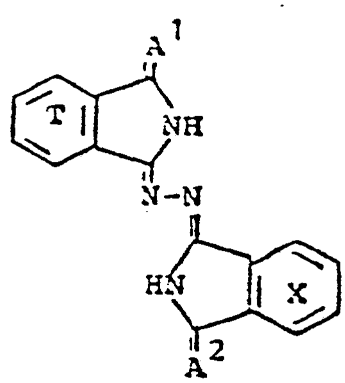

(I)

wherein

the rings designated X and T can be substituted and

$A^1$ and $A^2$ represent the divalent radical of a compound having two replaceable hydrogen atoms on a C or N atom in particular the divalent radical of a methylene-active compound, of an amine, of a hydrazine, of a hydrazide or of a hydrazone,

and the salts and complexes of these compounds.

2. Compounds according to Claim 1 in which the rings X and T are substituted by 1,2,3- or 4 substituents from the series comprising halogen, in particular chlorine and bromine; $C_1$-$C_6$-alkyl, in particular methyl and ethyl: $C_1$-$C_6$-alkoxy; in particular methoxy and ethoxy, carboxyl; nitro; and carbamoyl.

3, Compounds according to Claims 1 and 2 in which $A^1$ and or $A^2$ represent

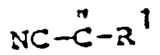 ; 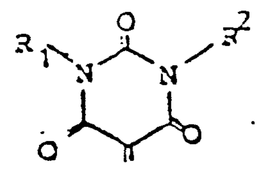 ; 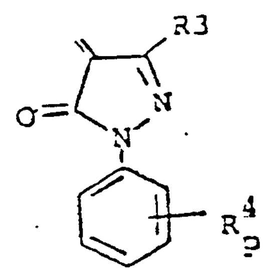 ;

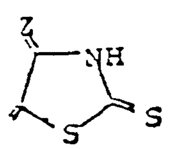 ; 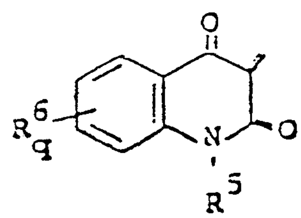 or 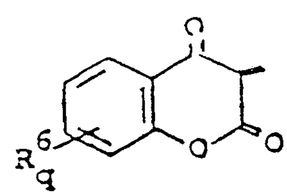

wherein

R1 designates cyano: $C_1$-$C_6$-alkoxy-$C_1$-$C_6$-alkoxy-carbonyl; carbamoyl which is optionally substituted by $C_1$-$C_6$-alkyl, benzyl naphthyl or phenyl, it being possible for phenyl, benzyl and naphthyl to be substituted for example by chlorine, bromine, $C_1$-$C_6$-alkyl $C_1$-$C_6$-alkoxy nitro, trifluoromethyl, $C_1$-$C_6$-alkylcarbonyl, in particular acetyl, cyano, $C_1$-$C_6$-alkylamino, benzoylamino, phthalimidyl or carbamoyl; $C_1$-$C_6$-alkylcarbonyl, in particular acetyl, benzoyl, $C_1$-$C_6$-alkoxycarbonyl, benzyloxycarbonyl, phenoxycarbonyl, it being possible for benzoyl, benzyl and phenoxy to be substituted, for example by halogen, such as chlorine and bromine, nitro, $C_1$-$C_6$-alkyl, acylamino in particular $C_1$-$C_6$-alkyl-carbonylamino or phthalimidyl; phenyl which is optionally substituted by halogen, in particular chlorine and bromine, nitro, cyano or trifluoromethyl, or a heterocyclio radical of the formula

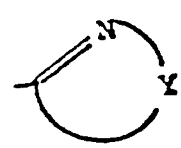

in which

Y represents the remaining members of a 5- or 6-membered ring which may optionally contain further heteroatoms, preferably a heterocyclic radical of the formulae

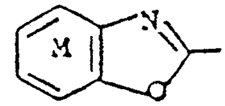

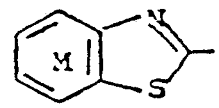

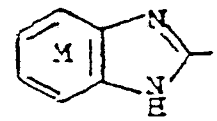

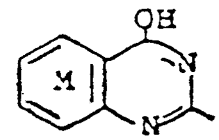

wherein

the rings designated M can be substituted, for example by halogen, preferably chlorine and bromine nitro $C_1$-$C_6$-alkyl preferably methyl and ethyl or $C_1$-$C_6$-alkoxy, preferably methoxy and ethoxy,

$R_1$ and $R^2$ designate hydrogen, $C_1$-$C_6$-alkyl; phenyl which is optionally substituted by halogen, such as chlorine and bromine, $C_1$-$C_6$-alkyl, $C_1$-$C_6$-alkoxy or nitro: or α-and β-naphthyl.

$R^3$ represents $C_1$-$C_6$-alkyl preferably methyl; amino; $C_1$-$C_6$-alkylcarbonyl; carbamoyl; or $C_1$-$C_6$-alkoxycarbonyl;

$R^4$ represents $C_1$-$C_6$-alkyl; $C_1$-$C_6$-alkoxy; halogen, preferably chlorine; or nitro;

p designates 0,1 or 2;

Z designates O or S.

$R^5$ designates hydrogen or $C_1$-$C_6$-alkyl, preferably methyl.

$R^6$ designates halogen preferably chlorine; or nitro and

q designates 0, 1, 2, 3 or 4.

4. Compounds according to Claims 1 and 2 in which

$$A^1 \text{ and/or } A^2 \text{ represent a radical } >N-R^7$$

in which

$R^7$ represents a phenyl radical which is optionally at most trisubstituted by halogen such as chlorine and bromine, nitro, cyano, carbamoyl, trifluoromethyl, phthalimidyl, $C_1$-$C_6$-alkyl-carbonylamino preferably acetylamino or benzoylamino which in turn can be further substituted by chlorine, $C_1$ $C_6$-alkyl, preferably methyl or nitro; α- or β-naphthyl, or a radical of the formulae

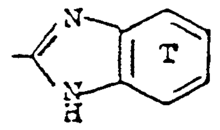

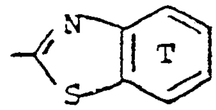

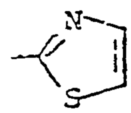

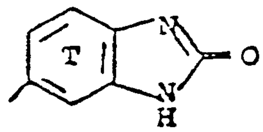

wherein
T has the abovementioned meaning.

5. Compounds according to Claims 1 and 2, in which $A^1$ and/or A- represent a radical of the formula

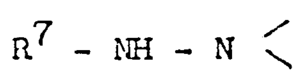

wherein
$R^7$ has the meaning given in Claim 4.

6. Compounds according to Claims 1 and 2, in which $A^1$ and/or A represent a radical of the formula

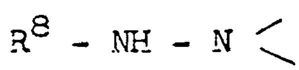

wherein
$R^8$ designates $C_1$-$C_6$-alkylcarbonyl or benzoyl which is optionally substituted by halogen, such as chlorine and bromine, nitro, cyano, carbamoyl, $C_1$-$C_6$-alkylcarbonylamino, preferably acetylamino, or phthalimidyl.

7. Compounds according to Claims 1 and 2 in which $A^1$ and/or $A^2$ represent a radical of the formula

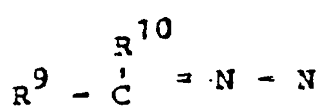

in which
$R^9$ represents hydrogen or $C_1$-$C_6$-alkyl and $R^{10}$ represents phenyl which is optionally substituted by chlorine, nitro, $C_1$-$C_6$-alkyl, $C_1$-$C_6$-alkyl-carbonylamino, preferably acetylamino, phthalimidyl, cyano, carbamoyl or trifluoromethyl or a heterocyclic radical of the formula

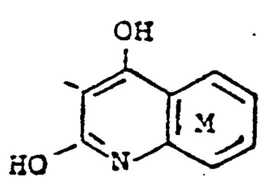

in which
M has the abovementioned meaning.

8. Process for preparing compounds of the formula (I), characterised in that a hydrazone of the formula

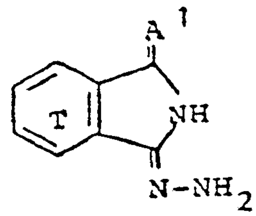

is condensed with an imine of the formula

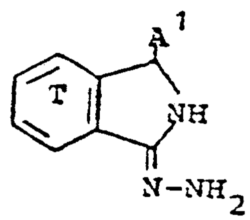

9. Process for preparing oompounds of the formula (I), characterised in that a hydrazone of the formula

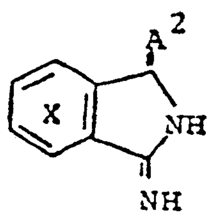

is condensed under acid conditions.

10. Process for pigmenting organic macromolecular substances, characterised in that isoindolazines according to Claims 1 - 7 are used.

**Revendications**

Isoindolazines qui, selon l'une de leurs structures tautomères, répondent à la formule

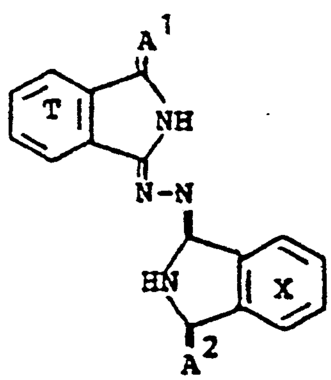

(I)

dans laquelle

les noyaux désignés par X et T peuvent être substitués et

$A^1$ et $A^2$ représentent le reste divalent d'un composé comprenant deux atomes échangeables d'hydrogène sur un atome de carbone ou d'azote, notamment le reste divalent d'un composé à activité méthylénique, d'une amine, d'hydrazine, d'hydrazide ou d'hydrazone, ainsi que les sels et complexes de ces composés.

2. Composés suivant la revendication 1, dans lesquels les noyaux X et T sont substitués par 1, 2, 3 ou 4 substituants de la série halogéno, notamment chloro et bromo; alkyle en $C_1$ à $C_6$; notamment méthyle et éthyle;

alkoxy en $C_1$ à $C_6$, notamment méthoxy et éthoxy; carboxy; nitro; carbamoyle.

3. Composés suivant les revendications 1 et 2, dans lesquels $A^1$ et/ou $A^2$ représentent

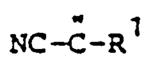 ; 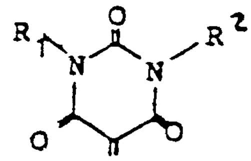 ; 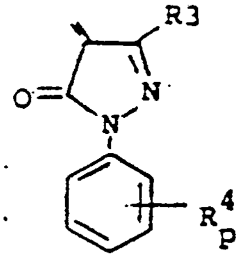 ;

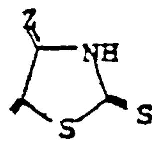 ; 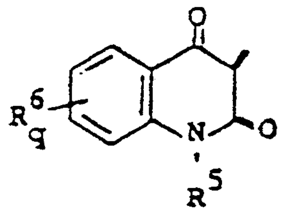 ou 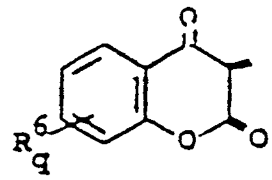

où

$R^1$ est un groupe cyano; (alkoxy en $C_1$ à $C_6$)-(alkoxy en $C_1$ à $C_6$)-carbonyle; carbamoyle éventuellement substitué par un radical alkyle en $C_1$ à $C_6$, benzyle, naphtyle ou phényle, les radicaux phényle, benzyle, naphtyle pouvant être substitués par exemple par du chlore, du brome, un radical alkyle en $C_1$ à $C_6$, alkoxy en $C_1$ à $C_6$, nitro, trifluorométhyle (alkyle en $C_1$ à $C_6$)-carbonyle, notamment acétyle, cyano, (alkyle en $C_1$ à $C_6$)-amino, benzoylamino, phtalimidyle, carbamoyle; un groupe (alkyle en $C_1$ à $C_6$)-carbonyle, notamment acétyle, benzoyle, un groupe (alkoxy en $C_1$ à $C_6$) -carbonyle, benzyloxycarbonyle, phénoxycarbonyle, les radicaux benzoyle, benzyle et phénoxy pouvant être substitués par exemple par un halogène, tel que chlore et brome, un substituant nitro, alkyle en $C_1$ à $C_6$, acylamino, notamment (alkyle en $C_1$ à $C_6$)-carbonylamino, phtalimidyle; un groupe phényle éventuellement substitué par un halogène, notamment chlore et brome, un radical nitro, cyano, trifluorométhyle, ou un reste hétérocyclique de formule

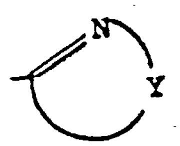

dans laquelle

Y représente les membres restants d'un noyau pentagonal ou hexagonal contenant éventuellement d'autres hétéroatomes, de préférence d'un reste hétérocyclique des formules

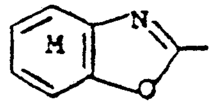

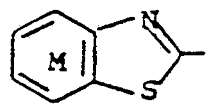

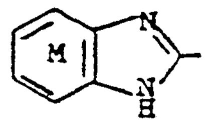

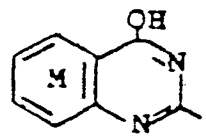

dans lesquelles les noyaux désignés par M peuvent être substitués par exemple par un halogène, de préférence chlore et brome, un substituant nitro, alkyle en $C_1$ à $C_6$, de préférence méthyle et éthyle, un substituant alkoxy en $C_1$ à $C_6$, de préférence méthoxy et éthoxy;

$R^1$, $R^2$ désignent l'hydrogène, un groupe alkyle en $C_1$ à $C_6$; un groupe phényle éventuellement substitué par un halogène tel que chlore et brome, un radical alkyle en $C_1$ à $C_6$, alkoxy en $C_1$ à $C_6$ ou nitro; un groupe α- et un groupe β-naphtyle;

$R^3$ est un groupe alkyle en $C_1$ à $C_6$, de préférence méethyle; amino; (alkyle en $C_1$ à $C_6$)-carbonyle; carbamoyle; (alkoxy en $C_1$ à $C_6$)-carbonyle;

$R^4$ est un groupe alkyle en $C_1$ à $C_6$; alkoxy en $C_1$ à $C_6$; un halogène, de préférence le chlore; un groupe nitro;

p a la valeur 0, 1 ou 2;

Z représente O ou S;

$R^5$ est l'hydrogène ou un groupe alkyle en $C_1$ à $C_6$, de préférence méthyle;

$R^6$ est un halogène, de préférence le chlore; un groupe nitro et

q a les valeurs 0, 1, 2, 3 ou 4.

4. Composés suivant les revendications 1 et 2, dans lesquels $A^1$ et/ou $A^2$ représentent un reste

$$>N - R^7$$

où

$R^7$ représente un reste phényle éventuellement substitué au maximum 3 fois par un halogène tel que chlore et brome, un radical nitro, cyano, carbamoyle, trifluorométhyle, phtalimidyle, (alkyle en $C_1$ à $C_6$) carbonylamino, de préférence acétylamino, benzoylamino qui peut quant à lui être encore susbtitué par du chlore, un radical alkyle en $C_1$ à $C_6$, de préférence méthyle ou un radical nitro; un groupe α- ou β-naphtyle ou un reste des formules

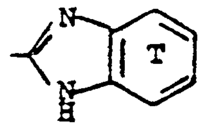

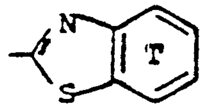

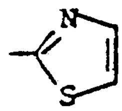

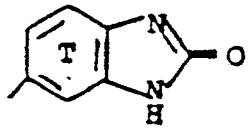

dans lesquelles
T a la définition indiquée ci-dessus.

5. Composés suivant les revendications 1 et 2, dans lesquels $A^1$ et/ou $a^2$ représentent un reste de formule

$$R^7 - NH - N<$$

où $R^7$ a la définition indiquée dans la revendication 4.

6. Composés suivant les revendications 1 et 2, dans lesquels $A^1$ et/ou $A^2$ représentent un reste de formule

$$R^8 - NH - N<$$

dans laquelle
$R^8$ est un groupe (alkyle en $C_1$ à $C_6$)-carbonyle ou un groupe benzoyle éventuellement substitué par un halogène tel que chlore et brome, un radical nitro, cyano, carbamoyle, alkyle en $C_1$ à $C_6$)-carbonylamino, de préférence acétylamino, phtalimidyle.

7. Composés suivant les revendications 1 et 2, dans lesquels $A^1$ et/ou $A^2$ représentent un reste de formule

$$R^9 - \overset{\displaystyle R^{10}}{\overset{|}{C}} = N - N<$$

dans laquelle
$R^9$ représente l'hydrogène ou un radical alkyle en $C_1$ à $C_6$ et
$R^{10}$ est un reste phényle éventuellement substitué par du chlore, un radical nitro, alkyle en $C_1$ à $C_6$, (alkyle en $C_1$ à $C_6$)-carbonylamino, de préférence acétylamino, phtalimidyle, cyano, carbamoyle ou trifluorométhyle ou un reste hétérocyclique de formule

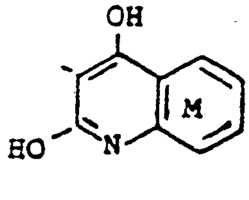

dans laquelle M a la définition indiquée ci-dessus.

8. Procédé de production de composés de formule (I), caractérisé en ce qu'on condense l'hydrazone de formule

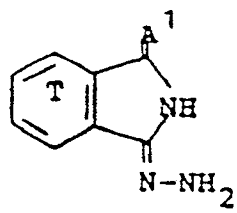

avec une imine de formule

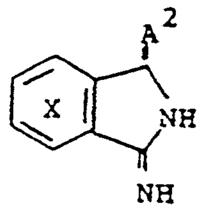

9. Procédé de production de composés de formule (I), caractérisé en ce qu'on condense une hydrazone de formule

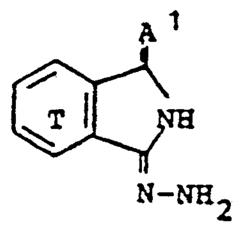

dans des conditions acides.

10. Procédé de pigmentation de substances organiques macromoléculaires, caractérisé en ce qu'on utilise des isoindolazines suivant les revendications 1 à 7.